# EUROPÄISCHE PATENTSCHRIFT

(11) **EP 1 082 586 B1**
(45) Veröffentlichungstag und Bekanntmachung des Hinweises auf die Patenterteilung: **11.06.2003**
(21) Anmeldenummer: 00910791.3
(22) Anmeldetag: 09.03.2000
(51) Int. Cl.: G01D 5/20

(54) **VERFAHREN ZUR ERFASSUNG DER POSITION UND DER BEWEGUNGSGESCHWINDIGKEIT EINES ZWISCHEN ZWEI SCHALTSTELLUNGEN HIN UND HER BEWEGBAREN STELLELEMENTS**
METHOD FOR DETERMINING THE POSITION AND THE SPEED OF MOTION BETWEEN OF A CONTROL ELEMENT WHICH CAN BE MOVED BACK AND FORTH BETWEEN TWO SWITCHING POSITIONS
PROCEDE DE DETECTION DE LA POSITION ET DE LA VITESSE DE DEPLACEMENT D'UN ELEMENT DE REGLAGE ANIME D'UN MOUVEMENT DE VA-ET-VIENT ENTRE DEUX POSITIONS DE COMMUTATION

(30) Priorität: 23.03.1999 DE 19913050
(43) Veröffentlichungstag der Anmeldung: 14.03.2001
(73) Patentinhaber: FEV Motorentechnik GmbH, 52078 Aachen (DE)
(72) Erfinder: SCHMITZ, Günter, D-52074 Aachen (DE); BOIE, Christian, D-52064 Aachen (DE)
(74) Vertreter: Langmaack, Jürgen, Dipl.-Ing.
(86) Internationale Anmeldenummer: EP0002038
(87) Internationale Veröffentlichungsnummer: WO00057135

(56) Entgegenhaltungen:
- DE-A- 3 303 994
- US-A- 5 045 785
- US-A- 5 210 490
- US-A- 5 233 293
- PATENT ABSTRACTS OF JAPAN vol. 1998, no. 14, 31. Dezember 1998 (1998-12-31) & JP 10 260675 A (YAMAHA CORP), 29. September 1998 (1998-09-29)

## Beschreibung

Bei Stellelementen, die zwischen zwei Schaltstellungen hin und her bewegbar sind, insbesondere bei schnell hin und her bewegbaren Stellelementen, besteht vielfach das Bedürfnis, in Verbindung mit einer Regelung und/oder Steuerung während der Bewegung des Stellelements sowohl die jeweilige aktuelle Geschwindigkeit als auch die jeweilige aktuelle Position des Schaltelements in bezug auf die jeweilige Schaltstellung zu erfassen. Dies gilt insbesondere zur Erfassung von Geschwindigkeit und Position bei der Annäherung des Stellelements an die jeweilige Schaltstellung.

Die Erfassung von Geschwindigkeit und Position ist insbesondere bei einem Stellelement von Bedeutung, das mit einem Anker in Verbindung steht, der mit Hilfe eines oder auch zwei mit Abstand zueinander angeordneter Elektromagneten gegen die Kraft von Rückstellfedern hin und her bewegt wird. Da bei der Annäherung an die jeweils durch die Polfläche des Elektromagneten definierte Schaltstellung die der Bewegung entgegenwirkende Kraft der Rückstellfeder linear ansteigt, die magnetische Kraft mit zunehmender Verminderung des Abstands zwischen Polfläche und Anker progressiv ansteigt, bewegt sich bei konstanter Bestromung der Anker mit wachsender Geschwindigkeit auf die Polfläche zu. Dies kann dazu führen, daß der Anker beim Auftreffen auf die Polfläche von dem fangenden Elektromagneten nicht gehalten wird, sondern zurückprallt. Je nach Größe der Auftreffgeschwindigkeit kann der Anker vollständig zurückprallen, so daß er vom fangenden Elektromagneten gar nicht gehalten wird, oder der Anker prallt ein oder mehrere Male um ein geringes Stück zurück, wird aber vom Elektromagneten immer wieder eingefangen. In beiden Fällen ist jedoch eine einwandfreie Funktion des über das Stellelement betätigten Systems nicht mehr gewährleistet. Ein derartig gestaltetes Systems kann beispielsweise ein Gaswechselventil an einer Kolbenbrennkraftmaschine sein, das mit dem Anker verbunden ist und das über zwei mit Abstand zueinander angeordnete, über eine Steuereinrichtung abwechselnd bestromte Elektromagneten geöffnet und geschlossen werden kann. Durch eine entsprechende Steuerung der Bestromung des fangenden Elektromagneten ist es nun möglich, mit zunehmender Annäherung des Ankers an die Polfläche den Strom am fangenden Elektromagneten so zurückzunehmen, daß die jeweils wirksame Magnetkraft geringfügig über der Rückstellkraft der zugeordneten Rückstellfeder liegt, so daß der Anker "sanft" mit einer Geschwindigkeit von beispielsweise weniger als 0,1 m/sek. auf die Polfläche auftrifft.

Um nun die auf das Stellelement wirkende Stellkraft so zu beeinflussen, daß die jeweilige Schaltstellung mit einer vorgebbaren Geschwindigkeit erreicht wird, ist es erforderlich, zum einen über den Stellweg den Verlauf der Geschwindigkeit zu erfassen und zum anderen, die jeweilige Position des Stellelements, d. h. den Stellweg in Abhängigkeit von der Zeit zu erfassen, um über eine Änderung der Bestromung auf die Ankergeschwindigkeit Einfluß nehmen zu können. Die Verwendung von zwei Sensoren, von denen der eine die Geschwindigkeit des Stellelements erfaßt und der andere den Verlauf des Weges in Abhängkeit von der Zeit erfaßt, verbietet sich für die industrielle Anwendung schon aus Kostengründen.

Bei der Verwendung eines Wegsensors ist es nun grundsätzlich möglich, das Geschwindigkeitssignal aus dem Wegsignal durch Differenzierung zu erzeugen. Dies ist jedoch meist sehr problematisch, da das Wegsignal Rauschanteile aufweist, die bei der Differenzierung das Nutzsignal überdecken.

Aus US-A-5,210,490 ist für den Einsatz an einem Kraftfahrzeug-Stoßdämpfer ein Positionssensor bekannt, bei dem ein mit der bewegbaren Radaufhängung verbundener Kernkörper relativ zur einem feststehenden Rohrtransformator bewegbar geführt ist. Der Rohrtransformator weist eine Primärspule und eine Sekundärspule auf. Durch unterschiedliche Stellungen des Kernkörpers zwischen der Primärspule und der Sekundärspule verändert sich die elektrische Übersetzung des Rohrtransformators, aus der dann ein Signal über die jeweilige Position des sich auf und ab bewegenden Rades gegenüber dem Fahrzeugchassis abgeleitet werden kann.

Aus US-A-5,045,785 ist eine Stoßdämpferanordnung bekannt, zur Erfassung der relativen Stellung des bewegten Teiles der Radaufhängung gegenüber dem Fahrzeugchassis, bei der ein konischer Körper aus ferromagnetischem Material relativ zu einer Ringspule geführt wird. Je nach Stellung des Tauchkörpers in bezug zur Ringspule ergeben sich unterschiedliche Luftspalte, so daß bei einer Verschiebung des Tauchkörpers gegenüber der Ringspule ein elektrisches Signal abgegriffen werden kann, wobei es zur Sicherung der Einhaltung einer vorgebbaren oberen und unteren Endposition des Stoßdämpfers jeweils ein Minimum- und ein Maximumsignal erfaßt werden kann und somit der hydraulische Druck im Stoßdämpfer entsprechend angepaßt werden kann.

Aus US-A-5,233,293 ist eine Stoßdämpferanordnung bekannt, bei der eine Hauptspule vorgesehen ist, der an beiden Enden jeweils eine gesondert geschaltete Hilfsspule zugeordnet ist. Relativ zu dieser Spulenanordnung wird ein Permanentmagnet geführt, der entsprechend seiner Bewegungsgeschwindigkeit in der Spule einen geschwindigkeitsproportionalen Strom erzeugt, der als Signal zur Erfassung der Bewegungsgeschwindigkeit des Permanentmagneten und damit der Relativgeschwindigkeit des bewegten Teils der Radaufhängung zum Fahrzeugchassis erfaßt werden kann. Durch die Länge der Hauptspule ist der zulässige Verschiebungsweg des bewegbaren Teils gegenüber dem feststehenden Teil definiert. Durch die beiden endseitigen Hilfsspulen wird bei einem Überschwingen des Endes der Hauptspulen in der jeweiligen Hilsspule ein Strom erzeugt, der als zusätzliches Signal erfaßt werden muß, durch das ein Überschreiten des Schwingweges der Radaufhängung nach oben und/oder nach unten angezeigt wird und eine entsprechende Einregelung über die Stoßdämpferhydraulik vorgenommen werden kann. Eine fortlaufende Erfassung der Position in Abhängigkeit von der Zeit erfolgt hierbei nicht und ist mit diesem System auch nicht möglich.

Der Erfindung liegt nun die Aufgabe zugrunde, ein Verfahren zu schaffen, das es ermöglicht, an einem hin und her bewegbaren Stellelement mit nur einem Sensorelement jeweils die Geschwindigkeit und den Weg in Abhängigkeit von der Zeit, nachstehend als Position bezeichnet, für das Stellelement zu erfassen.

Diese Aufgabe wird gemäß der Erfindung gelöst durch ein Verfahren zur Erfassung der Bewegungsgeschwindigkeit und der Position eines zwischen einer ersten und einer zweiten Schaltstellung hin und her bewegbaren Stellelements mit den Merkmalen des Anspruchs 1. Bei diesem Verfahren wird die Tatsache ausgenutzt, daß bei einer entsprechenden Relativbewegung des Tauchkörpers zum Permanentmagneten oder des Permanentmagneten in der Tauchspule eine Spannung induziert wird, die von der Änderungsgeschwindigkeit des magnetischen Flusses und somit von der Bewegungsgeschwindigkeit abhängt. Diese Spannung bzw. der Verlauf der Spannung in Abhängigkeit von der Zeit läßt sich erfassen, so daß jedem Spannungswert zu einem gegebenen Zeitpunkt eine bestimmte Geschwindigkeit zugeordnet werden kann. Dadurch, daß neben dem Permanentmagneten auch ein gesonderter Tauchkörper in der Tauchspule synchron zur Bewegung des Stellelements bewegt wird, kann über die hierdurch bewirkten Änderungen der Impedanz, d. h. des Scheinwiderstandes der Tauchspule, zu jedem Zeitpunkt auch die jeweilige Position des Stellelements erfaßt werden, da die Änderung davon abhängig ist, wie weit der Tauchkörper in die Tauchspule eintaucht. Die Art der Änderung hängt von den elektrischen und/oder magnetischen Eigenschaften des Tauchkörpers ab. Weist der Tauchkörper eine magnetische Leitfähigkeit auf, die sehr viel größer als 1 ist, dann ergibt sich eine Veränderung der Induktivität, d. h. ein in der Tauchspule fließender Strom ändert seinen Verlauf in Abhängigkeit von der Zeit und der Eintauchtiefe. Weist der Tauchkörper eine gute elektrische Leitfähigkeit auf, ändern sich die Verluste durch Wirbelstromeffekte im Tauchkörper, was einer Erhöhung des resistiven, d. h. des Ohm'schen Anteils der Impedanz entspricht. Damit ist aber die Möglichkeit gegeben, über nur eine Spule und über die Einwirkung des Permanentmagneten und des Tauchkörpers gleichzeitig die Geschwindigkeit und die Position ohne zwischengeschaltete Rechenschritte zu erfassen.

Für die Erfassung der Position sind nun zwei unterschiedliche Verfahrensweisen möglich. In einer ersten Ausgestaltung der Erfindung ist vorgesehen, daß die Tauchspule mit einem hochfrequenten Wechselstrom beaufschlagt wird und die infolge der Bewegung des zumindest teilweise aus einem elektrisch leitfähigen Material bestehenden Tauchkörpers in der Tauchspule bewirkte Änderung des Stromflusses infolge der Wirbelstromverluste als Signal für die Position des Stellelements erfaßt werden. Hierbei wird das Phänomen ausgenutzt, daß bei einer Beaufschlagung der Spule mit einer Wechselspannung ein magnetisches Wechselfeld erzeugt wird, durch das in dem als Sekundärwicklung wirkenden elektrisch leitfähigen Tauchkörper ein Stromfluß in Form eines Wirbelstroms verursacht wird. Dieser Stromfluß verändert sich je nach Eintauchtiefe bzw. Position des Tauchkörpers in bezug auf die Tauchspule. Damit verändern sich aber auch die Eigenschaften der Spule, speziell das Wechselstromverhalten je nach Position des Tauchkörpers. Über eine Bestimmung des Scheinwiderstands oder einer daraus abgeleiteten Größe, wie beispielsweise Spannung, Strom oder Phasenzuordnung, kann hieraus die Position des Tauchkörpers und damit die Position des mit dem Tauchkörper verbundenen Stellelements erfaßt werden. Der Tauchkörper kann hierbei als gesondertes Element oder aber auch durch das Stellelement selbst gebildet werden. Wird das Stellelement aus anderen Gründen aus einem elektrisch nichtleitenden Material hergestellt, wird der aus leitfähigem Material hergestellte Tauchkörper unmittelbar mit dem Permanentmagneten verbunden. Dann sollte das elektrisch leitfähige Material des Tauchkörpers eine relativ kleine magnetische Leitfähigkeit µ besitzen, um das magnetische Feld des Permanentmagneten nicht kurzzuschließen. Sind der Permanentmagnet und der Tauchkörper in Bewegungsrichtung des Stellelements hintereinander angeordnet, dann kann das elektrisch leitfähige Material des Tauchkörpers als "Verlängerung" des Magneten in einer Richtung sogar einen positiven Effekt hinsichtlich der Linearität des zeitlichen Verlaufs der Spannung in der Spule in Abhängigkeit von der Bewegungsgeschwindigkeit des Permanentmagneten erzielt werden.

Die Frequenz der Wirbelstrommessung richtet sich zweckmäßigerweise nach dem benötigten Frequenzbereich für die Spannungsmessung, also der Bewegungsfrequenz des Stellelements. Ergibt sich beispielsweise für die Spannungsmessung zur Erfassung der Bewegungsgeschwindigkeit eine Signalfrequenz von maximal etwa 100 kHz, dann ist es zweckmäßig, wenn für die Positionserfassung über die Erfassung der Wirbelstromverluste eine Frequenz vorgegeben wird, die mindestens um etwa den Faktor 10 höher liegt, also eine Frequenz von beispielsweise etwa 1 MHz. Hierdurch wird gewährleistet, daß sich die Messungen praktisch nicht beeinflussen.

In vorteilhafter weiterer Ausgestaltung der Erfindung ist vorgesehen, daß für den Tauchkörper ein Material verwendet wird, das erst bei höheren Wechselstromfrequenzen nennenswerte Wirbelströme entstehen läßt. Mit diesem Verfahrensschritt wird erreicht, daß der Wirbelstromeinfluß auf das durch den Permanentmagneten induzierte Geschwindigkeitssignal möglichst klein gehalten wird. Damit ist es möglich, daß die Änderungen der induzierten Spannungen im zu messenden Frequenzbereich weitgehend unbeeinflußt bleiben, um neben dem Geschwindigkeitssignal auch ein Signal über den Wegverlauf des Stellelements zu erhalten, d. h. die jeweilige Position des Stellelements zu erfassen und eine Verbesserung der dynamischen Genauigkeit zu erreichen. Dies kann beispielsweise durch eine sogenannte Blechung des Tauchkörpers oder auch durch einen Tauchkörper aus einem Sintermaterial entsprechender Zusammensetzung oder entsprechender Struktur bewirkt werden, so daß bei derart ausgebildeten Tauchkörpern im Bereich der Trägerfrequenzen nennenswerte und damit für die Signalerzeugung verwendbare Wirbelstromverluste entstehen, nicht jedoch im Bereich der Meßfrequenzen.

In einer anderen Ausgestaltung des erfindungsgemäßen Verfahrens ist vorgesehen, daß die infolge der Bewegung des aus einem magnetisch leitfähigen Material bestehenden Tauchkörpers in der Tauchspule verursachten Änderungen der Induktivität als Signal für die Ankerposition erfaßt werden. Auch hierbei wird die Tatsache ausgenutzt, daß sich die Induktivität der stromdurchflossenen Spule in Abhängigkeit von der Stellung des Tauchkörpers gegenüber der Spule infolge der Veränderung des Magnetfeldes ebenfalls verändert. Aus dieser Veränderung kann wieder ein entsprechendes Signal abgeleitet werden.

In weiterer vorteilhafter Ausgestaltung der Erfindung ist vorgesehen, daß im Bewegungsbereich des mit dem Permanentmagneten verbundenen Tauchkörpers zwei Tauchspulen mit unterschiedlicher Windungszahl verwendet werden. Diese Verfahrensweise ist insbesondere dann vorteilhaft, wenn die Position des Tauchkörpers über eine Bestimmung der Veränderung der Induktivität erfolgen soll. Hier ist es zweckmäßig, wenn für den Teil der Spule, der dem Tauchkörper zur Bestimmung der Position des Stellelements zugeordnet ist, eine andere Windungszahl vorgegeben wird als für den Teil der Spule, der dem mit dem Tauchkörper verbundenen Permanentmagneten zur Bestimmung der Bewegungsgeschwindigkeit zugeordnet ist. Die beiden Spulen können auch auf demselben Spulenkörper angeordnet werden. Es ist aber auch möglich, hier eine Spule vorzusehen, die mit einer sogenannten Anzapfung versehen ist, d. h. ein Teil der Spule weist eine geringe Windungszahl auf und der andere Teil der Spule weist eine hohe Windungszahl auf. Um hier die erforderlichen Kabelzuführungen gering zu halten, kann gegebenenfalls auch eine von den beiden Spulen über einen Kondensator für die hohen Frequenzen überbrückt werden, so daß man mit zwei Anschlüssen für das Spulensystem auskommt.

Weitere vorteilhafte Ausgestaltungen sind in den Unteransprüchen 2 bis 7 angegeben und aus der nachfolgenden Beschreibung von Ausführungsbeispielen zu entnehmen.

Die Erfindung wird anhand schematischer Zeichnungen von Ausführungsbeispielen näher erläutert. Es zeigen:
- Fig. 1: eine Prinzipdarstellung eines Sensorelements mit einer Schaltungsanordnung in Form eines Blockschaltbildes,
- Fig. 2: eine abgewandelte Ausführung des Sensorelements gemäß Fig. 1,
- Fig. 3: einen elektromagnetischen Aktuator zur Betätigung eines Gaswechselventils mit einem integrierten Sensorelement,
- Fig. 4: den Verlauf des Weges beim Ablösen eines Ankers in Abhängikeit von der Zeit,
- Fig. 5: den Geschwindigkeitsverlauf beim Ablösen eines Ankers in Abhängigkeit von der Zeit,
- Fig. 6 bis 10: unterschiedliche Ausführungsformen für ein Sensorelement zur Anwendung bei einem Aktuator gemäß Fig. 3,
- Fig. 11 bis 13: weitere Ausführungsformen für ein Sensorelement,
- Fig. 14: eine Schaltungsanordnung für eine Ausführungsform mit zwei Meßspulen im Sensorelement,
- Fig. 15: eine weitere Schaltungsanordnung für eine Ausführungsform mit zwei Meßspulen im Sensorelement,
- Fig. 16: eine Ausführungsform mit drei Meßspulen im Sensorelement.

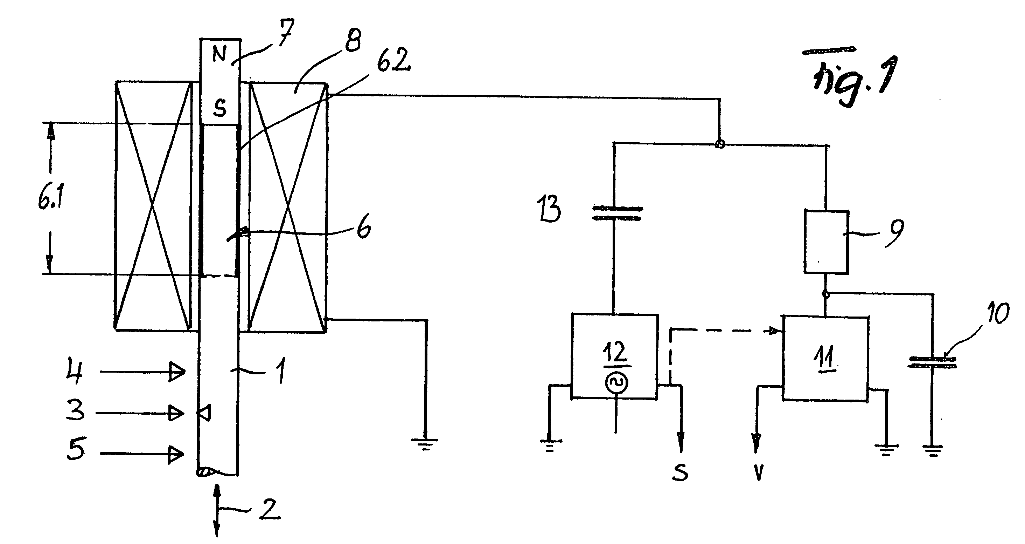

In Fig. 1 ist anhand eines Blockschaltbildes der prinzipielle Aufbau eines Sensorelements zur gleichzeitigen Erfassung von Bewegungsgeschwindigkeit und Position eines Stellgliedes in Form einer Meßschaltung dargestellt. Ein Stellelement 1, das beispielsweise als Bolzen ausgebildet sein kann, ist mit einem hier nicht näher dargestellten Antrieb verbunden, beispielsweise einem elektromagnetischen Aktuator, dessen Elektromagnet bestromt wird und der einen mit dem Stellelement verbundenen Anker aufweist. Durch den Antrieb wird das Stellelement 1 entsprechend dem Pfeil 2 hin und her bewegbar geführt. Die Bewegung erfolgt, beispielsweise ausgehend von einer durch die beiden Markierungen 3 definierten Mittellage in eine hier durch einen nicht näher dargestellten Anschlag definierte erste Schaltstellung 4 und eine, ebenfalls durch einen nicht näher dargestellten Anschlag definierte Schaltstellung 5.

Für den Betrieb des mit dem Stellelement 1 verbundenen Systems ist es erforderlich, jeweils die Bewegungsgeschwindigkeit des Stellelements 1 und den Weg des Stellelements 1 in Abhängigkeit von der Zeit, d. h. seine jeweilige Position, zu erfassen, wobei es insbesondere darauf ankommt, die aktuelle Geschwindigkeit und die aktuelle Position im Annäherungsbereich der beiden Schaltstellungen 4 und 5 zu erfassen. Hierzu ist das Stellelement 1 mit einem Tauchkörper 6 verbunden, der seinerseits mit einem Permanentmagneten 7 verbunden ist, so daß der Tauchkörper 6 und der Permanentmagnet 7 synchron zur Bewegung des Stellelements 1 in einer Tauchspule 8 hin und her bewegbar geführt sind. Die genaue Länge, Eintauchtiefe und auch die Lage der Ruheposition sind vom jeweiligen Anwendungsfall abhängig und nicht auf die Darstellung beschränkt.

Bei der Bewegung wird durch den Permanentmagneten 7 in der Tauchspule 8 eine Änderung des magnetischen Flusses verursacht, die ihrerseits eine Spannung in der Tauchspule 8 hervorruft. Um die Spannung erfassen zu können, ist die Tauchspule 8 über einen Tiefpaß, beispielsweise bestehend aus einem Widerstand 9 und einem Kondensator 10 mit einer Spannungsauswertungsschaltung 11 verbunden. Diese Spannungsauswertungsschaltung 11 liefert dann das gewünschte Geschwindigkeitssignal "v".

Um nun gleichzeitig die Position des Tauchkörpers 6 in bezug auf die Schaltstellungen 4 und/oder 5 erfassen zu können, ist eine mit einem Generator 12.1 zur Erzeugung eines hochfrequenten Wechselstroms verbundene Wirbelstrommeßschaltung 12 über einen Kondensator 13 mit der Tauchspule 8 verbunden. Durch die Wirbelstrommeßschaltung 12 wird die Tauchspule 8 mit einem hochfrequenten Strom beaufschlagt. Der Kondensator 13 dient hierbei als Frequenzweiche. Die Wirbelstrommeßschaltung 12 liefert dann das Wegsignal "s". Durch eine Zuführung des in der Wirbelstrommessung erfaßten Wegsignals s zur Spannungsauswertungsschaltung 11 zur Erfassung der Geschwindigkeit ist es möglich, eine entsprechende Korrektur des geschwindigkeitsproportionalen Spannungssignal der Spannungsauswertungsschaltung 11 zu bewirken.

Der Tauchkörper 6 ist bei dem hier dargestellten Beispiel aus einem elektrisch leitfähigen Material hergestellt, wobei hier gegebenenfalls das Stellelement 1 insgesamt aus elektrisch leitfähigem Material hergestellt sein kann. Die Anordnung kann auch so getroffen werden, daß der "Tauchbereich" 6.1 mit einer elektrisch leitfähigen Schicht 6.2 versehen ist, die auch als elektrisch leitfähige Hülse ausgebildet sein kann, während der "Kern" aus einem elektrisch nicht leitfähigen Material besteht.

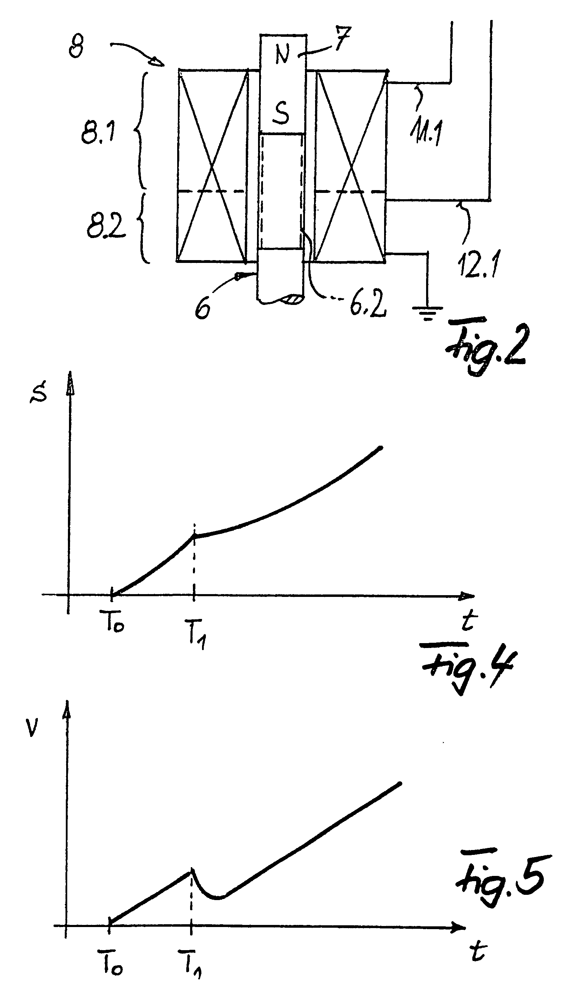

In der in Fig. 2 dargestellten Abwandlung ist für ein Stellelement 1 aus einem magnetisch leitfähigen Material, das mit dem Permanentmagneten 7 verbunden ist, eine Spulenanordnung 8 vorgesehen, die entweder aus zwei hintereinander angeordneten, auf den gleichen Spulenkörper gewickelten Spulen mit unterschiedlicher Windungszahl besteht oder die durch eine Spule mit einer Anzapfung gebildet ist, so daß über den ersten Spulenbereich 8.1 mit der geringen Windungszahl die Weg- oder Positionsmessung und über den Spulenbereich 8.2 mit der hohen Windungszahl die Geschwindigkeitsmessung durchgeführt werden kann. Der "Tauchbereich" ist auch hier mit einer elektrisch leitfähigen Schicht 6.2 versehen. Die abgehenden Kabel 11.1 und 12.1 sind dann jeweils gesondert auf die Spannungsauswertungsschaltung 11 einerseits und die Wirbelstrommeßschaltung 12 andererseits aufgeschaltet. Eine derartige Spulenanordnung ist für beliebige Zuordnungen von Permanentmagnet und Tauchkörper anwendbar.

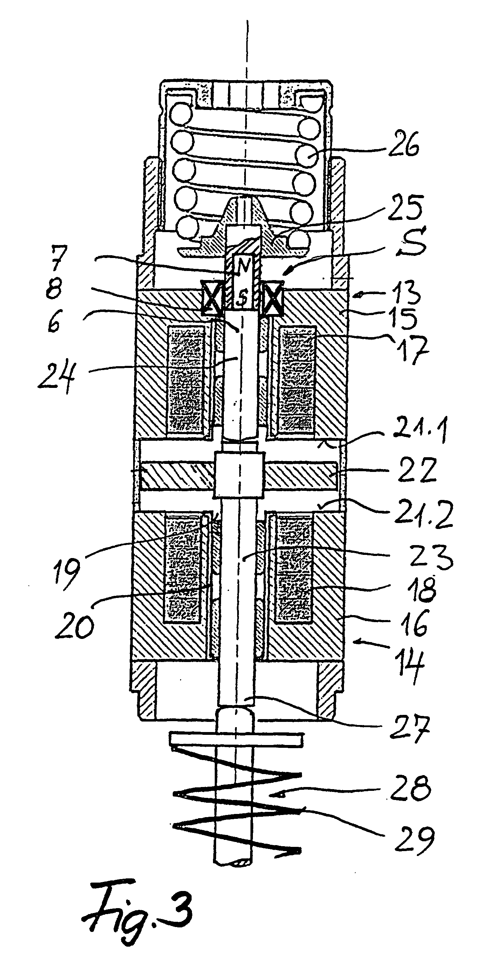

In Fig. 3 ist als praktisches Anwendungsbeispiel ein elektromagnetischer Aktuator zur Betätigung eines Gaswechselventils dargestellt. Dieser elektromagnetische Aktuator besteht im wesentlichen aus zwei Elektromagneten 13, 14, die jeweils einen geblechten Jochkörper 15, 16 aufweisen, in denen jeweils eine Spule 17, 18 angeordnet ist, die jeweils mit einer hier nicht näher dargestellten steuerbaren Stromversorgung in Verbindung steht. Die Jochkörper 15, 16 weisen jeweils eine Bohrung 19 auf, in der jeweils eine Führungshülse 20 befestigt ist.

Die beiden Elektromagneten 13, 14 sind im Abstand zueinander angeordnet, so daß ihre Polflächen 21.1 und 21.2 jeweils einander zugekehrt sind. Im Zwischenraum zwischen den beiden Polflächen 21 der beiden Elektromagneten 13, 14 ist ein plattenförmiger Anker 22 angeordnet, der mit einem Führungsbolzen 23 fest verbunden ist. Der Führungsbolzen 23 ist in der Führungshülse 20 des Elektromagneten 14 geführt. Im Elektromagneten 13 ist ein gesonderter Führungsbolzen 24 vorgesehen, der sich mit einem Ende auf dem ankerseitigen Führungsbolzen 23 abstützt und mit seinem anderen Ende über einen Federteller 25 auf einer Rückstellfeder 26 gestützt ist.

Das freie Ende 27 des mit dem Anker 22 verbundenen Führungsbolzens 23 stützt sich auf einem Stellglied 28, beispielsweise dem Schaft eines Gaswechselventils ab, dem eine Rückstellfeder 29 zugeordnet ist. Die beiden Rückstellfedern 26 und 28 sind so ausgelegt, daß sich bei stromlos gesetzten Elektromagneten 13, 14 der Anker 22 in der Mittellage zwischen den beiden Polflächen 21 befindet.

Die beiden Elektromagneten 13 und 14 werden nun über eine gesteuerte Stromversorgung abwechselnd bestromt, so daß der Anker 22 abwechselnd an der Polfläche 21.1 des Elektromagneten 13 und an der Polfläche 21.2 des Elektromagneten 14 zur Anlage kommt und bei Beaufschlagung der Spule 17 bzw. der Spule 18 mit einem sogenannten Haltestrom eine vorgegebene Zeit jeweils gehalten werden kann.

Wird die Spule des jeweils haltenden Elektromagneten, beispielsweise des Elektromagneten 13, stromlos gesetzt, dann wird unter dem Einfluß der Rückstellkraft der Rückstellfeder 26 der Anker 22 von der Polfläche 21.1 des Elektromagneten 13 in Richtung auf die Polfläche 21.2 des Elektromagneten 14 bewegt. Wird nun die Spule 18 des fangenden Elektromagneten 14 beispielsweise kurz nach Beginn der Ankerbewegung bestromt, dann wird durch das vom Elektromagneten 14 ausgeübte Magnetfeld der Anker 22 gegen die Kraft der Rückstellfeder 29 zu seiner Anlage auf der Polfläche 21.2 am Elektromagneten 14 bewegt und hierbei wiederum durch die Beaufschlagung der Spule 18 mit einem Haltestrom an der Polfläche 21.2 gehalten.

Da nun jeweils bei der Annäherung des Ankers 22 an die Polfläche des bestromten, d. h. des fangenden Elektromagneten, die auf den Anker 22 wirkende Magnetkraft bei ungeregelter Bestromung progressiv ansteigt, die in Gegenrichtung wirkende Kraft der zugeordneten Rückstellfeder jeweils nur linear ansteigt, wird der Anker 22 mit steigender Geschwindigkeit auf die entsprechende Polfläche 21 zubewegt, so daß der Anker 22 hier mit relativ hoher Geschwindigkeit auftrifft. Durch eine entsprechende Zurücknahme der Bestromung der Spule des fangenden Elektromagneten kann nun mit zunehmender Annäherung des Ankers 22 die auf ihn wirkende Magnetkraft so reduziert werden, daß sie zum Zeitpunkt der Anlage des Ankers auf der Polfläche die entsprechende Rückstellkraft der zugehörigen Rückstellfeder nur geringfügig überschreitet und so der Anker 22 mit reduzierter Geschwindigkeit auf die Polfläche 21 auftrifft.

Um nun die Zurücknahme des Stroms bei zunehmender Annäherung des Ankers an eine Polfläche eines fangenden Magneten reduzieren zu können, ist bei dem hier dargestellten Ausführungsbeispiel der Führungsbolzen 24 zumindest mit seinem oberen Ende als Tauchkörper 6 ausgebildet, der aus einem elektrisch leitfähigen Material besteht. Der Tauchkörper 6 ist an seinem dem Führungsbolzen 24 abgewandten Ende mit einer Ausnehmung versehen, in die ein Permanentmagnet 7 eingesetzt ist.

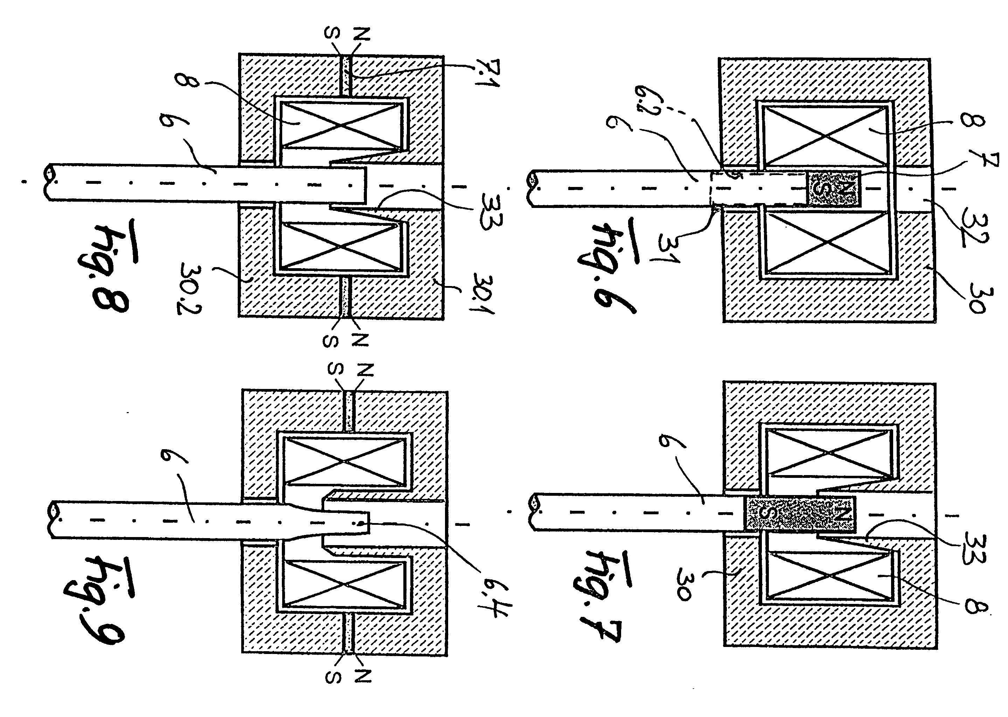

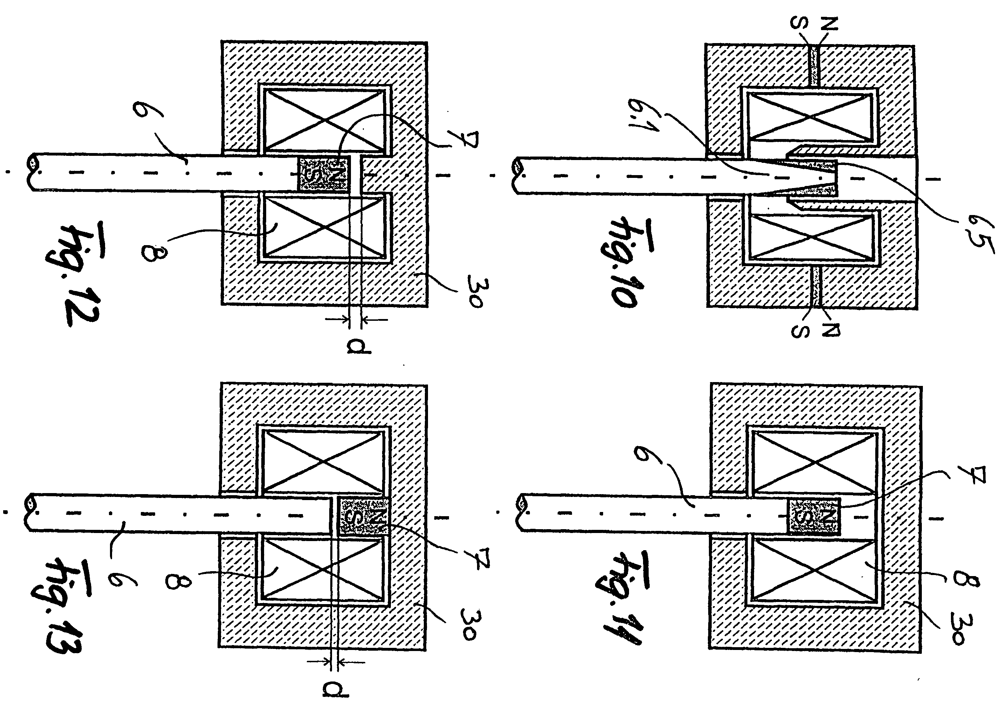

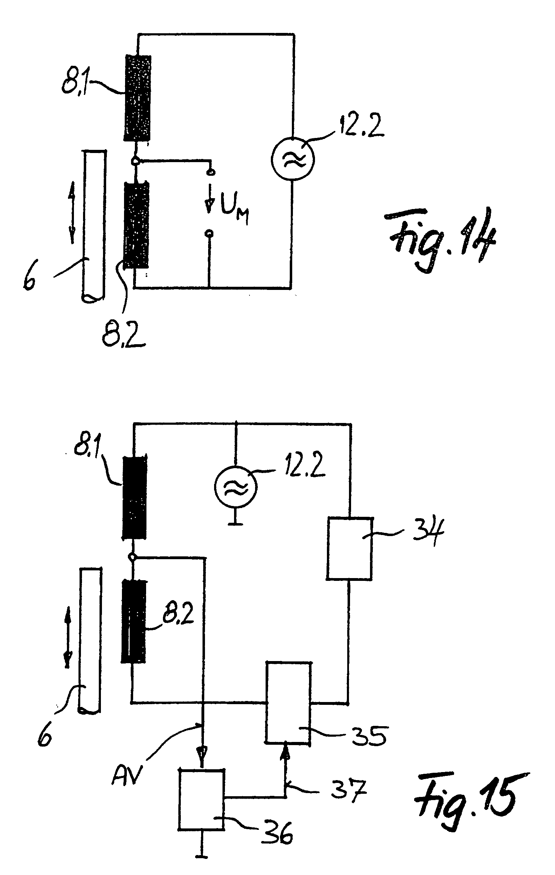

Im Jochkörper 15 ist in einer entsprechenden Ausnehmung ein Sensorelement S mit einer Tauchspule 8 eingesetzt, die gegenüber den Feldern des Elektromagneten 13 mit einer magnetischen Abschirmung versehen ist, wie sie nachstehend anhand von Fig. 6 bis 13 noch näher beschrieben wird. Die Spule 8 ist über entsprechende Schaltungsanordnungen mit einer Auswertschaltung und einer Steuerung für die Bestromung verbunden.

Mit Hilfe dieses aus Tauchkörper 6, Permanentmagneten 7 und Tauchspule 8 gebildeten Sensorelements S ist es nun möglich, im Betrieb die jeweilige Position des Ankers 22 und seine jeweilige Geschwindigkeit über eine entsprechende Auswerteschaltung zu erfassen und die hieraus gewonnenen Signale für Position bzw. Weg einerseits und Geschwindigkeit andererseits auf die erwähnte Steuerung der Stromversorgung aufzuschalten, um so bei der Annäherung des Ankers 22 an eine Polfläche 21 des jeweils fangenden Elektromagneten die Bestromung soweit zurückzunehmen, daß der Anker mit nur geringer Geschwindigkeit auf die Polfläche auftrifft und hierbei prellfrei fangen und gehalten werden kann.

Auch die Erfassung des Bewegungsablaufs beim Ablösen des Ankers 22 von der Polfläche kann für das angegebene Beispiel eines elektromagnetischen Aktuators zur Betätigung eines Gaswechselventils von Interesse sein. Dieser ist in Fig. 4 und Fig. 5 dargestellt.

Besteht beispielsweise zwischen dem Führungsbolzen 27 und dem das Stellglied 28 bildende Gaswechselventil ein sogenanntes Ventilspiel, d. h. bei Anlage des Ankers 22 an der Polfläche 21.1 des Elektromagneten 13 (Schließmagneten) zwischen dem freien Ende des Führungsbolzens 27 und dem freien Ende des Schaftes des Gaswechselventils 28 ein Zwischenraum, dann kann mit Hilfe des erfindungsgemäßen Meßverfahrens auch das Ventilspiel erfaßt werden.

In Fig. 4 ist der Verlauf des Weges des Ankers 22 in Abhängigkeit von der Zeit dargestellt und zwar vom Zeitpunkt T₀ des Lösens von der Polfläche 21.1 an. Aufgrund des vorhandenen Zwischenraums zwischen dem freien Ende des Führungsbolzens 27 und des Gaswechselventils 28 bewegt sich der Anker 22 zusammen mit dem Tauchkörper 6 aufgrund der geringeren Masse und der fehlenden Gegenwirkung der Rückstellfeder 29 mit wachsender Geschwindigkeit bis zum Zeitpunkt T₁ des Auftreffens auf den Schaft des Gaswechselventils. Nunmehr muß die Rückstellfeder 26 in Verbindung mit dem sich am Elektromagneten 14 (Öffnermagneten) aufbauenden Magnetfeld den Anker 22 gegen die Kraft der Rückstellfeder 29 weiter beschleunigen. Da hier plötzliche eine größere Masse zu beschleunigen ist, läßt sich dies an einer Unstetigkeit im Verlauf der durch die Wirbelstrommeßeinrichtung 12 erfaßten Meßkurve für den Weg in Abhängigkeit von der Zeit erkennen. Über eine Erfassung dieser Unstetigkeitsstelle kann dann auch ein Signal für die Größe des vorhandenen Ventilspiels abgeleitet werden.

In gleicher Weise macht sich auch der vorstehend beschriebene Bewegungsablauf beim Gaswechselventil mit Ventilspiel bei der Erfassung der Geschwindigkeit bemerkbar. Wie Fig. 5 erkennen läßt, wird der Anker nach dem Lösen zunächst mit ansteigender Geschwindigkeit beschleunigt. Beim Auftreffen des Führungsbolzens 27 auf den Schaft 28 des geschlossenen Gaswechselventils wird der Anker jedoch stark abgebremst, so daß die Bewegungsgeschwindigkeit abfällt und erst nach Beschleunigung nunmehr von Anker und Gaswechselventil wieder ansteigt. Bei der Geschwindigkeitsmessung ist eine prägnante Unstetigkeitsstelle in dem erfaßten Spannungsverlauf zu erkennen, so daß auch aus dem den Verlauf der Geschwindigkeit repräsentierenden Spannungsverlauf Rückschlüsse über die Größe des vorhandenen Ventilspiels gezogen werden können.

Das vorstehend beschriebene Verfahren zur gleichzeitigen Erfassung von Weg und Geschwindigkeit besitzt eine gewisse Eigenkalibrierfähigkeit. Diese ergibt sich aus der Kenntnis des physikalischen Zusammenhangs zwischen dem gemessenen Weg und der Geschwindigkeit. Wenn sich auch die jeweils erzeugten Signale aufgrund ihrer Rauschanteile in vielen Fällen nicht ohne weiteres dazu eignen, aus der Weginformation eine Geschwindigkeitsinformation zu erzielen bzw. aus der Geschwindigkeitsinformation ein Wegsignal durch Integration zu erzeugen, so kann aber doch eine Kalibrierung des jeweils anderen Signals aus dem physikalischen Zusammenhang gewonnen werden. So kann eine Wegdifferenz über eine längere Bewegungsdistanz bezogen auf die benötigte Zeit durch Vergleich mit der über die Geschwindigkeitsmessung erfaßten mittleren Geschwindigkeit zu dessen Kalibrierung herangezogen werden.

Anhand der Fig. 6 bis 13 werden unterschiedliche Ausführungsformen für ein Sensorelement S beschrieben. Hierbei zeigt Fig. 6 den Grundaufbau. Die Spule 8 oder auch zwei Spulen 8.1 und 8.2, wie in Fig. 2 dargestellt, sind von einem wirbelstromarmen Gehäuse 30 allseitig umschlossen, das Durchgangsöffnungen 31 und 32 für den mit dem Stellelement 1 verbundenen Tauchkörper 6 aufweist. Das Gehäuse 30 kann hierbei aus einer Blechwicklung bestehen oder als pulvermetallurgischer Sinterkörper mit entsprechender Zusammensetzung des Sinterpulvers, beispielsweise Ferritpulver, hergestellt sein. Es weist jedoch magnetisch leitende Eigenschaften auf. Das Gehäuse 30 ist beispielsweise drehsymmetrisch zur Bewegungsachse des Tauchkörpers 6 ausgebildet.

Durch dieses Gehäuse 30 wird die Spule 8 gegenüber magnetischen Feldern abgeschirmt, so daß beispielsweise die in Fig. 3 dargestellte Anordnung in oder an einem Aktuatormagneten möglich ist, ohne daß dessen Magnetfeld als Störfeld auf den Sensor S wirksam wird.

Der Tauchkörper 6 ist hierbei als Verlängerung des Permanentmagneten 7 aus ebenfalls magnetisch gut leitendem Material hergestellt, aber mit einer elektrisch gut leitenden Schicht oder Umhüllung 6.2 versehen, die sich bis über den Permanentmagneten 7 erstrecken kann, wie in Fig. 3 gezeigt.

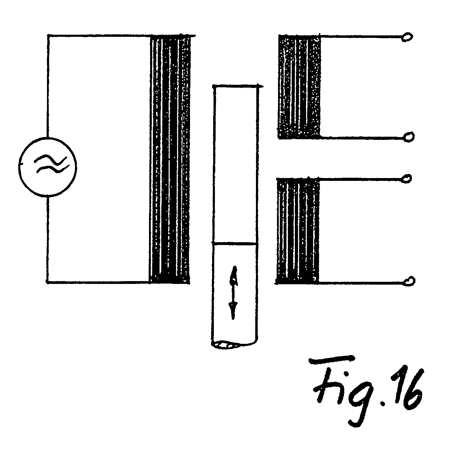

Die in Fig. 7 dargestellte Abwandlung der Ausführungsform gemäß Fig. 6 zeigt die Anordnung eines Flußleitelements 33, das den Bewegungsbereich des Permanentmagneten 7 rohrförmig überdeckt und über das der Empfindlichkeitsverlauf beeinflußt werden kann. Die Rohrlänge und/oder der Rohrdurchmesser ist an den jeweiligen Anwendungsfall anzupassen. Anstelle eines Flußleitelements 33 am Gehäuse 30 kann auch das Ende des Tauchkörpers 6 entsprechend geformt sein, wie Fig. 9 und 10 zeigen.

Bei der in Fig. 8 dargestellten Ausführungsform ist das Gehäuse 30 zweiteilig ausgebildet. Zwischen den beiden Teilen 30.1 und 30.2 ist ein Permanentmagnetring 7.1 mit axialer Polarität - wie gezeichnet - angeordnet. Während bei der Ausführungsform gemäß Fig. 6 sich der Permanentmagnet 7 zusammen mit dem Tauchkörper 6 relativ zur Spule 8 bewegt, bewirken bei der Ausführungsform gemäß Fig. 8 die Relativbewegungen des Tauchkörpers 6 zur feststehenden Spule 8 und dem feststehenden Permanentmagnetring 7.1 die Meßsignale.

Die Fig. 9 und 10 zeigen entsprechende Abwandlungen. Fig. 9 und 10 zeigen Ausführungsformen mit geformtem Ende 6.4 für den Tauchkörper 6 zur Beeinflussung des Empfindlichkeitsverlaufs. Bei der Ausführungsform gemäß Fig. 10 ist der Bolzen 6 aus einem magnetisch nichtleitenden Material, beispielsweise Edelstahl, hergestellt und am freien Ende 6 verjüngt ausgebildet. Darauf ist ein Endstück 6.5 aus einem magnetisch leitfähigen Material, beispielsweise Eisen, aufgesetzt.

Die Fig. 11, 12 und 13 zeigen Ausführungsformen mit einem endseitig geschlossenen Gehäuse 30. Bei dieser Form ist für die induzierte Spannung die Änderung des Abstandes "d" zwischen dem freien Ende des Permanentmagneten 7 und der Gehäusewandung entscheidend. Bei gleicher Geschwindigkeit steigt die Spannung etwa quadratisch zur Abstandsminderung an. Damit erhöht sich die Auflösung und Genauigkeit des erzeugten Signals gerade in der Endphase der Annäherung an die Gehäusewandung, die gleichzeitig die Schaltstellung definiert, wobei das freie Ende des Tauchkörpers 6 hierbei nicht auf die Gehäusewandung auftrifft. Bei Schaltmagneten soll die Annäherung des Ankers an die Polfläche über die Bestromung gerade so gesteuert werden, daß der Anker nur noch eine geringe Geschwindigkeit besitzt.

Wie Fig. 12 und 13 zeigen, kann der Permanentmagnet 7 für diese Ausführungsform sowohl am Tauchkörper 6 als auch am Gehäuse 30 befestigt werden.

Die Auswertung der Position ist nicht auf das normale Wirbelstromprinzip beschränkt. Vielmehr können auch andere bereits bekannte Verfahren hierzu angewendet werden Bei der Verwendung von zwei Spulen 8.1 und 8.2 kann zum Beispiel aus den beiden Spulen 8.1 und 8.2 mit den Induktivitäten L₁ und L₂ ein induktiver Spannungsteiler aufgebaut werden. Dies ist in Fig. 14 verdeutlicht. Der Tauchkörper 6 wird als Kern der beiden Spulen im Inneren der Spulen hin und her bewegt Hierdurch ändert sich die Induktivität der Spulen. Beaufschlagt man nun die Reihenschaltung dieser Spulen über einen Wechselstromgenerator 12.2 mit einer (hochfrequenten) Wechselspannung, so ergibt sich gemäß der Spannungsteilerregel eine Meßspannung U_{M}, die der Gleichung U_{M}=U_{G}•L₁/(L₁+L₂) folgt, wobei U_{G} die Spannung des Generators 12.2 ist. Je weiter sich der Tauchkörper 6 in der unteren Spule 8.2 aufhält, um so größer ist die Induktivität dieser Spule und demgemäß um so größer diese Meßspannung. Da es hierbei auf den Realteil der magnetischen Permeabilität µ ankommt, sollten Wirbelströme bei diesem Verfahren vermieden werden, zum Beispiel durch Verwendung eines wirbelstromarmen Tauchkörpers 6 mit großem µ.

Eine weitere Möglichkeit derartige Induktivitätsinderung auszuwerten, besteht darin, die Induktivitäten als Teile einer Brücke zu verschalten.

Eine dritte Variante ist in Fig. 15 dargestellt. Hierbei wird die Spannung eines Wechselspannungsgenerators 12.2 direkt auf die eine Spule 8.1 gegeben. Außerdem wird die Spannung mittels einer Schaltung 34 invertiert und somit um 180° phasenverschoben auf die zweite Spule 8.2 gegeben. Zunächst sei die Verstärkerschaltung 35 dabei außer Betracht gelassen. Wenn nun beide Spulen die gleiche Impedanz aufweisen, so wird sich in der Mitte der beiden Spulen eine Ausgangsspannung AV von 0 Volt einstellen (wegen der gegenphasigen Speisung der Spulen). Falls die Induktivitäten allerdings unterschiedlich groß, stellt sich als Meßsignal eine Spannung AV ein, die von Null verschieden ist. Dies wird von einer Meß- und Regeleinrichtung 36 erkannt und es wird ein "Stellsignal" 37 erzeugt, daß die Verstärkerschaltung solange verstellt, bis das Signal AV wieder zu null wird. In welche Richtung die Verstärkung verstellt werden muß, ob also die Spule 8.2 mit einem größeren oder mit einem kleineren Signal versorgt werden muß, wird an der Phase des Ausgangssignals AV erkannt. Hierzu wird der Meß- und Regeleinrichtung 36 ein hier der Übersichtlichkeit halber nicht dargestelltes Signal des Wechselspannungsgenerators 12.2 zur Verfügung gestellt und bei der Messung mit berücksichtigt , beispielsweise durch Synchrongleichrichtung des Meßsignals AV.

Als Positionssignal kann nun das Stellsignal 37 verwendet werden, dessen Größe von den Impedanzverhältnissen der Spulen abhängt, die wiederum durch den sich bewegenden Tauchkörper 6 beeinflußt werden.

In Fig. 16 ist eine weitere Alternative zur Positionsmessung mit drei Spulen dargestellt. Diese zeigt das vorbekannte Verfahren des LVDT (Linear Variable Displacement Transducer). Dabei wird eine Primärspule 8.3 mit einem hochfrequenten Wechselstrom beaufschlagt. Der obere Teil 6.5 des Tauchkörpers 6 weist eine hohe magnetische Leitfähigkeit auf. Hierdurch wird insbesondere in derjenigen Sekundärspule 8.1 oder 8.2 eine Spannung bzw. ein Strom übergekoppelt, in der sich der obere Teil 6.5 des Tauchkörpers 6 befindet.

Nun kann durch eine Auswertung der beiden Sekundärspannungen der beiden Sekundärspulen 8.1 und 8.2 auf die Position des oberen Teils 6.5 zurückgeschlossen werden.

Es sind hier verschiedene Auswertungsschaltungen denkbar. So können beispielsweise die Mittenanzapfungen der Spulen verbunden werden und die äußeren Anschlüsse über Widerstände gemeinsam an einen Synchrongleichrichter geführt werden, der mit der mit der Primärspule verbundenen Hochfrequenzquelle synchronisiert ist. Dann erhält man nach einer Tiefpaßfilterung ein zur Position proportionales Signal. Auf eine genauere Beschreibung sowie auf die Darstellung weiterer Auswertmöglichkeiten für die Signale kann hier verzichtet werden, da solche Verfahren Stand der Technik sind.

## Patentansprüche

1. Verfahren zur gleichzeitigen Erfassung der Position und der Bewegungsgeschwindigkeit eines über einen ansteuerbaren Aktuator zwischen einer ersten und einer zweiten Schaltstellung hin und her bewegbaren Stellelements (1), bei dem ein mit dem Stellelement (1) in Verbindung stehender, aus magnetisch und/oder elektrisch leitfähigem Material bestehender Tauchkörper (6) synchron zur Bewegung des Stellelements (1) durch eine Spulenanordnung (8) mit wenigstens einer mit einem Wechselstrom oder einer Wechselspannung beaufschlagten, feststehende Tauchspule geführt wird, wobei die infolge einer Relativbewegungen des Tauchkörpers (6) zur Tauchspule (8) verursachten Änderungen der Impedanz und/oder eines Stroms als Signal für die Position des Stellelements (1) erfaßt werden und ferner die infolge der Relativbewegungen des Tauchkörpers (6) zu einem der Tauchspule (8) zugeordneten, feststehenden Permanentmagneten oder der Relativbewegung eines Permanentmagneten (7) am Tauchkörper (6) zur Tauchspule (8) erzeugte Spannungsänderung als Signal für die Bewegungsgeschwindigkeit des Stellelements (1) erfaßt werden, wobei die in der Spulenanordnung hervorgerufenen Änderungen von Spannung und/oder Strom und/oder Impedanz mittels einer Frequenzweiche als getrennte Signale für Position und Bewegungsgeschwindigkeit zur Verfügung stehen.

2. Verfahren nach Anspruch 1, **dadurch gekennzeichnet, daß** die Tauchspule mit einem hochfrequenten Wechselstrom beaufschlagt wird und die infolge der Bewegung des aus einem elektrisch leitfähigen Material bestehenden Tauchkörpers in der Tauchspule verursachten Änderungen des Stromflusses infolge der Wirbelstromverluste als Signal für die Position des Stellelements erfaßt werden.

3. Verfahren nach Anspruch 1 oder 2, **dadurch gekennzeichnet, daß** für den Tauchkörper ein Material verwendet wird, das erst bei höheren Wechselstromfrequenzen Wirbelströme entstehen läßt.

4. Verfahren nach Anspruch 1 und/oder 3, **dadurch gekennzeichnet, daß** die infolge der Bewegung des aus einem magnetisch leitfähigen Material bestehenden Tauchkörpers in der Tauchspule verursachten Änderungen die Induktivität als Signal für die Ankerposition erfaßt wird.

5. Verfahren nach einem der Ansprüche 1 bis 4, **dadurch gekennzeichnet, daß** im Bewegungsbereich des Tauchkörpers zwei Tauchspulen mit unterschiedlicher Windungszahl verwendet werden.

6. Verfahren nach einem der Ansprüche 1 bis 5, **dadurch gekennzeichnet, daß** das Stellelement mit einem Anker in Verbindung steht, der aus einer ersten Schaltstellung gegen die Kraft wenigstens einer Rückstellfeder bei Bestromung eines zugeordneten, mit einer Polfläche versehenen Elektromagneten unter Anlage an die Polfläche in seine zweite Schaltstellung bewegt werden kann.

7. Verfahren nach einem der Ansprüche 1 bis 6, **dadurch gekennzeichnet, daß** die Tauchspule im Bereich des Elektromagneten angeordnet und gegenüber dem Magnetfeld des Eektromagneten abgeschirmt ist.

## Claims

1. A method for the simultaneous detection of the position and the speed of movement of a control element (1) which can be moved back and forth between a first and a second switching position by means of a drivable actuator, wherein a plunger body (6) connected to the control element (1) and made of magnetically and/or electrically conductive material is guided synchronously to the movement of the control element (1) by a coil arrangement (8) having at least one fixed plunger-type coil which is supplied with an alternating current or an alternating voltage, wherein the changes in impedance and/or in a current caused by a movement of the plunger body (6) relative to the plunger-type coil (8) are detected as a signal for the position of the control element (1) and furthermore the change in voltage caused by the relative movements of the plunger body (6) relative to a fixed permanent magnet associated with the plunger-type coil (8) or the movement of a permanent magnet (7) on the plunger body (6) relative to the plunger-type coil (8) is detected as a signal for the speed of movement of the control element (1), the changes in voltage and/or current and/or impedance caused in the coil arrangement being available as separate signals for position and speed of movement by means of a frequency divider.

2. A method according to Claim 1, **characterised in that** the plunger-type coil is supplied with a high-frequency alternating current and the changes in current flow as a result of the eddy-current losses caused by the movement of the plunger body, made of an electrically conductive material, in the plunger-type coil are detected as a signal for the position of the control element.

3. A method according to Claim 1 or 2, **characterised in that** a material is used for the plunger body which only allows eddy currents to be produced at relatively high alternating-current frequencies.

4. A method according to Claim 1 and/or 3, **characterised in that** the changes caused as a result of the movement of the plunger body consisting of a magnetically conductive material in the plunger-type coil the inductance is detected as a signal for the armature position [sic].

5. A method according to one of Claims 1 to 4, **characterised in that** two plunger-type coils having different numbers of turns are used in the range of movement of the plunger body.

6. A method according to one of Claims 1 to 5, **characterised in that** the control element is connected to an armature which can be moved from a first switching position counter to the force of at least one return spring when current is supplied to an associated electromagnet provided with a pole surface, lying against the pole surface, into its second switching position.

7. A method according to one of Claims 1 to 6, **characterised in that** the plunger-type coil is arranged in the region of the electromagnet and is shielded from the magnetic field of the electromagnet.

## Revendications

1. Procédé de détection simultanée de la position et de la vitesse de déplacement d'un élément de réglage (1) pouvant être déplacé en va et vient entre une première et une deuxième positions de commutation à l'aide d'un actionneur pouvant être commandé, dans lequel un corps plongeur (6) relié à l'élément de réglage (1) et constitué d'un matériau magnétiquement et/ou électriquement conducteur est guidé de façon synchronisée avec le mouvement de l'élément de réglage (1) à l'aide d'un agencement de bobines (8) comprenant au moins une bobine fixe alimentée en courant alternatif ou en tension alternative, les variations de l'impédance et/ou d'un courant occasionnées suite à un mouvement relatif du corps plongeur (6) par rapport à la bobine (8) étant détectées en tant que signal pour la position de l'élément de réglage (1), et en outre la variation de tension engendrée suite aux mouvements relatifs du corps plongeur (6) par rapport à un aimant permanent fixe associé à la bobine (8) ou suite au mouvement relatif d'un aimant permanent (7) sur le corps plongeur (6) par rapport à la bobine (8), étant détectée en tant que signal pour la vitesse de déplacement de l'élément de réglage (1), les variations de tension et/ou de courant et/ou d'impédance engendrées dans l'agencement de bobines étant disponibles, au moyen d'un filtre d'aiguillage de fréquences, sous la forme de signaux séparés pour la position et la vitesse de déplacement.

2. Procédé selon la revendication 1, **caractérisé en ce que** la bobine est alimentée par un courant alternatif haute fréquence, et **en ce que** les variations du flux de courant occasionnées suite au mouvement du corps plongeur constitué d'un matériau électriquement conducteur à l'intérieur de la bobine, sont détectées, suite aux pertes par courants de Foucault, en tant que signal pour la position de l'élément de réglage.

3. Procédé selon la revendication 1 ou 2, **caractérisé en ce qu'**on utilise pour le corps plongeur un matériau qui ne laisse se former des courants de Foucault qu'en présence de fréquences de courant alternatif assez hautes.

4. Procédé selon la revendication 1 et/ou 3, **caractérisé en ce que** les variations occasionnées par le mouvement du corps plongeur constitué d'un matériau magnétiquement conducteur à l'intérieur de la bobine, l'inductance est détectée en tant que signal pour la position de l'induit.

5. Procédé selon l'une quelconque des revendications 1 à 4, **caractérisé en ce que** deux bobines comportant un nombre de spires différent sont utilisées dans la zone de mouvement du corps plongeur.

6. Procédé selon l'une quelconque des revendications 1 à 5, **caractérisé en ce que** l'élément de réglage est relié à un induit pouvant être déplacé depuis une première position de commutation dans sa deuxième position de commutation, contre la force d'au moins un ressort de rappel, lors de l'application d'un courant à un électro-aimant associé pourvu d'une surface polaire, par placement contre ladite surface polaire.

7. Procédé selon l'une quelconque des revendications 1 à 6, **caractérisé en ce que** la bobine est disposée dans la zone de l'électro-aimant et blindée contre le champ magnétique de l'électro-aimant.
